# EUROPEAN PATENT APPLICATION

(11) **EP 4 813 676 A1**
(43) Date of publication of application: **30.09.2026**
(21) Application number: 24896045.2
(22) Date of filing: 16.10.2024
(51) Int. Cl.: B60G 17/08, B60G 17/019, B60G 13/00

(54) **SUSPENSION SYSTEM AND VEHICLE**

(30) Priority: 30.11.2023 CN 202323276797 U
(71) Applicant: BYD Company Limited, Shenzhen, Guangdong 518118 (CN)
(72) Inventor: YAN, Long, Shenzhen, Guangdong 518118 (CN); ZHANG, Hongzhou, Shenzhen, Guangdong 518118 (CN); TAO, Dayu, Shenzhen, Guangdong 518118 (CN); LIANG, Xiaobo, Shenzhen, Guangdong 518118 (CN); LIU, Wengfan, Shenzhen, Guangdong 518118 (CN)
(74) Representative: Taor, Simon Edward William
(86) International application number: PCT/CN2024/125192
(87) International publication number: WO 2025/112951

(57) **Abstract**

A suspension system and a vehicle. The suspension system comprises a controller, an oil pump, and a shock absorber; the controller is electrically connected to the oil pump, the oil pump is communicated with the shock absorber by means of an oil pipe, and the controller adjusts the oil pressure in the shock absorber by means of the oil pump to drive the shock absorber to extend and contract; and a pressure sensor is provided on the oil pipe, the pressure sensor is communicationally connected to the controller, and the pressure sensor is configured to measure the oil pressure in the oil pipe.

## Description

### CROSS-REFERENCE TO RELATED APPLICATIONS

The present disclosure claims priority to Chinese Patent Application No. 202323276797.1 filed on November30, 2023 and the invention title of"Suspension System and Vehicle", which is incorporated herein by reference in its entirety.

### FIELD

The present disclosure relates to the technical field of vehicles, and in particular, to a suspension system and a vehicle.

### BACKGROUND

A suspension system is connected between a frame (i.e., a body) of a vehicle and a wheel to serve as an important assembly device for transmitting force and torque acting between the frame and the wheel. A shock absorber in the suspension system can be configured to buffer impact force transmitted from an uneven road surface to the frame, reduce vibration caused thereby, and ensure smooth driving of the vehicle. Among them, a hydraulic suspension system can drive the shock absorber to work by hydraulic force provided by an oil pump. The hydraulic suspension system is widely configured in vehicles due to advantages such as low cost and high reliability.

However, a hydraulic suspension system in the prior art usually cannot collect magnitude of hydraulic force acting on the shock absorber, which is not conducive to autonomous adjustment of the suspension system.

### SUMMARY

In view of the deficiencies of the prior art described above, an objective of the present disclosure is to provide a suspension system. Through targeted optimization of a structure of the suspension system, autonomous adjustment of the suspension system is ensured, a spatial layout of the suspension system is optimized, and space utilization is improved. In addition, the present disclosure further provides a vehicle equipped with the suspension system. Specific solutions are as follows:

In a first aspect, the present disclosure provides a suspension system. The suspension system includes a controller, an oil pump, and a shock absorber. The controller is electrically connected to the oil pump. The oil pump and the shock absorber are in communication via an oil pipe. The controller adjusts oil pressure in the shock absorber via the oil pump to drive the shock absorber to retract.

A pressure sensor is arranged on the oil pipe. The pressure sensor is in communication connection with the controller. The pressure sensor is configured to detect oil pressure in the oil pipe.

In the suspension system of the present disclosure, wherein the controller is arranged to control a state of the oil pump, i.e., to control a rotation speed and a rotation direction of a motor in the oil pump, magnitude of the oil pressure in the oil pipe and a flow direction of hydraulic oil are controlled. Since the shock absorber is connected between the frame and the wheel of the vehicle, by arranging the oil pump to provide certain oil pressure for the shock absorber to drive the shock absorber to retract, a relative position between the frame and the wheel is adjusted. Further, by arranging the pressure sensor on the oil pipe in communication with the oil pump and the shock absorber to detect the oil pressure in the oil pipe in real time. Meanwhile, the pressure sensor is arranged to be in communication connection with the controller to facilitate transmission of a detection signal to the controller. The controller adjusts the rotation speed and/or the rotation direction of the oil pump according to the detection signal and a driving condition of the vehicle (an operating state of the vehicle, a road condition, etc.) to correct the oil pressure in the oil pipe, to ensure the retraction stroke of the shock absorber is accurately controlled.

It is understandable that the suspension system of the present disclosure detects pressure in the oil pipe in real time by arranging the pressure sensor on the oil pipe, to ensure the controller can perform dynamic adaptive adjustment on the shock absorber according to the driving condition of the vehicle, to ensure the shock absorber always remains in an optimal retraction position. Meanwhile, by integrating the pressure sensor on the oil pipe, a spatial layout is optimized, and space utilization is improved.

In an embodiment, the shock absorber includes a hydraulic cylinder and a piston rod. One end of the piston rod extends into the hydraulic cylinder to divide the hydraulic cylinder into a first inner cavity and a second inner cavity.

In this embodiment, by adjusting a position of the piston rod in the hydraulic cylinder, the relative position between the frame and the wheel is adjusted, thereby adjusting a height of the vehicle. By controlling an oil quantity difference between the first inner cavity and the second inner cavity via the oil pump, the piston rod is caused to reciprocate in retraction, thereby adjusting the relative position between the frame and the wheel.

In an embodiment, the oil pipe includes a fitting connected to the oil pump or the shock absorber. A through hole extending through a side in a radial direction of the fitting itself is arranged on the fitting. The pressure sensor is embedded in the through hole.

In this embodiment, by arranging the fitting, connection reliability between the oil pipe and the oil pump or the shock absorber is ensured. By arranging the through hole on the fitting, the pressure sensor is fixed conveniently, and it is ensured that the pressure sensor can accurately detect pressure in the oil pipe.

In an embodiment, the pressure sensor includes a sensing section and a fixing section. The sensing section is closer to an interior of the fitting relative to the fixing section. The fixing section is arranged with a thread.

In this embodiment, by arranging the sensing section and the fixing section in the pressure sensor, the sensing section is in communication with the oil pipe and detects oil pressure in the oil pipe. The fixing section is arranged with the thread and cooperates with an inner wall of the through hole to reliably fix the pressure sensor to the oil pipe.

In an embodiment, a sealing element is further arranged between the pressure sensor and the through hole. The sealing element is configured to prevent hydraulic oil in the oil pipe from leaking from the through hole.

In this embodiment, by arranging the sealing element between the pressure sensor and the through hole to seal the through hole, the hydraulic oil in the oil pipe is prevented from leaking from the through hole, thereby improving safety performance of the suspension system of the present disclosure.

In an embodiment, a temperature sensor is arranged on the oil pipe. The temperature sensor is in communication connection with the controller. The temperature sensor is configured to detect oil temperature in the oil pipe.

In this embodiment, by arranging the temperature sensor on the oil pipe, and enabling the temperature sensor to transmit the detected oil temperature in the oil pipe to the controller, the controller is enabled to intelligently adjust working states of other functional components in the suspension system according to a detection signal, ensuring that the oil temperature is maintained within a normal range.

In an embodiment, the pressure sensor and the temperature sensor are of an integrated structure.

In this embodiment, by arranging the pressure sensor and the temperature sensor to be of the integrated structure, it is ensured that the suspension system can collect both the oil pressure and the oil temperature in the oil pipe, which facilitates intelligent adjustment by the controller, and can also reduce costs and improve space utilization.

In an embodiment, the suspension system includes an accumulator. The accumulator is in communication with the oil pipe. The accumulator is configured to absorb hydraulic oil in the oil pipe or to release hydraulic oil into the oil pipe to adjust pressure fluctuation in the oil pipe.

In this embodiment, by arranging the accumulator in communication with the oil pipe, when pressure in the oil pipe is excessively high, excess hydraulic energy is converted into elastic potential energy for storage, which can effectively counteract pressure fluctuation in the oil pipe, avoid hydraulic shock, thereby reducing noise, protecting components in the system, and improving operating stability of the system. When pressure in the oil pipe is insufficient, the accumulator releases stored energy to improve a response speed of the system.

In an embodiment, the accumulator includes a housing forming an accommodation cavity, a bladder accommodated in the accommodation cavity, and a port in communication with an exterior and the accommodation cavity.

In an embodiment, a number of the accumulator is two. Along a length direction of the oil pipe, the two accumulators are arranged on two sides of the pressure sensor, respectively.

In this embodiment, by arranging the accumulators on the two sides of the pressure sensor along the length direction of the oil pipe, damage to the pressure sensor caused by hydraulic shock in the oil pipe can be effectively avoided.

In an embodiment, the oil pipe includes a flexible section. The flexible section is configured to allow the oil pipe to be displaced relative to the oil pump or the shock absorber.

In this embodiment, by arranging the flexible section on the oil pipe, layout of the suspension system is facilitated. Meanwhile, the flexible section also has a function of absorbing pressure fluctuation in the oil pipe, thereby reducing noise to a certain extent.

In an embodiment, the flexible section and the fitting are connected by a press-fitting process.

In this embodiment, the press-fitting process is relatively simple. By connecting the fitting and the flexible section using the press-fitting process, both connection reliability and sealing performance between the fitting and the flexible section are ensured, and a structure of the oil pipe is simplified, thereby reducing production costs.

In a second aspect, the present disclosure provides a vehicle, including a frame, a wheel, and the suspension system according to any one of the foregoing embodiments. The suspension system is connected between the frame and the wheel and is configured to adjust a height of the frame.

It is understandable that the vehicle provided in the second aspect of the present disclosure, by adopting the suspension system provided in the first aspect of the present disclosure, also has all possible beneficial effects possibly involved in the suspension system in any embodiment of the first aspect of the present disclosure.

### BRIEF DESCRIPTION OF THE DRAWINGS

In order to illustrate technical solutions in embodiments of the present disclosure more clearly, the following briefly introduces accompanying drawings required for describing the embodiments. Obviously, the accompanying drawings in the following description show some embodiments of the present disclosure. For a person of ordinary skill in the art, other accompanying drawings can be obtained based on these accompanying drawings without creative efforts.
FIG. 1 is a schematic structural diagram of a suspension system provided in an embodiment of the present disclosure.
FIG. 2 is a schematic structural diagram of an oil pipe provided in an embodiment of the present disclosure.
FIG. 3 is a cross-sectional schematic structural diagram of an oil pipe provided in an embodiment of the present disclosure.
FIG. 4 is a partial enlarged view at portion A in FIG. 3.
FIG. 5 is a cross-sectional schematic structural diagram of an oil pipe provided in another embodiment of the present disclosure.
FIG. 6 is a cross-sectional schematic structural diagram of an oil pipe provided in yet another embodiment of the present disclosure;

The reference numerals in the specification are as follows:
200-suspension system; 10-controller; 20-oil pump; 30-oil pipe; 30a-first oil pipe; 30b-second oil pipe; 31-fitting; 31a-first fitting; 31b-second fitting; 311-fixing block; 312-via hole; 32-flexible section; 33-through hole; 34-mounting hole; 40-shock absorber; 41-hydraulic cylinder; 41a-first inner cavity; 41b-second inner cavity; 42-piston rod; 50-pressure sensor; 51-sensing section; 52-fixing section; 60-sealing element; 70-temperature sensor; 80-accumulator; 81-housing; 82-bladder; 83-accommodation cavity; 84-port.

### DETAILED DESCRIPTION

In order to facilitate understanding of the present disclosure, the present disclosure will be described more fully below with reference to related accompanying drawings. Preferred embodiments of the present disclosure are shown in the accompanying drawings. However, the present disclosure can be implemented in many different forms and is not limited to the embodiments described herein. On the contrary, these embodiments are provided to make the disclosure of the present disclosure more thorough and comprehensive.

The description of the following embodiments refers to the accompanying drawings to illustrate specific embodiments in which the present disclosure can be implemented. The serial numbers of components assigned herein, such as "first", "second", etc., are configured only to distinguish described objects and have no sequential or technical meaning. The terms "connection", "coupling" mentioned in the present disclosure, unless otherwise specified, include direct and indirect connection (coupling). Directional terms mentioned in the present disclosure, for example, "upper", "lower", "front", "rear", "left", "right", "inner", "outer", "side", etc., are only directions with reference to the accompanying drawings. Therefore, the directional terms are configured for better and clearer description and understanding of the present disclosure, and are not intended to indicate or imply that the device or element referred to must have a specific orientation or be constructed and operated in a specific orientation. Therefore, they should not be construed as limitations on the present disclosure.

In the description of the present disclosure, it should be noted that unless otherwise specified and defined, the terms "mount", "connect", and "couple" should be understood broadly. For example, they may be fixed connections, detachable connections, or integral connections; they may be mechanical connections; they may be direct connections or indirect connections through an intermediate medium; and they may be internal communication between two elements. For a person of ordinary skill in the art, specific meanings of the above terms in the present disclosure can be understood based on specific situations. It should be noted that terms "first", "second", etc. in the specification and claims of the present disclosure and the accompanying drawings are configured to distinguish different objects, rather than to describe a specific order. In addition, terms "include", "may include", "contain", or "may contain" used in the present disclosure indicate existence of disclosed corresponding functions, operations, elements, etc., and do not limit other one or more functions, operations, elements, etc. In addition, terms "include" or "contain" indicate existence of features, numbers, steps, operations, elements, components, or combinations thereof disclosed in the specification, and do not exclude existence or addition of one or more other features, numbers, steps, operations, elements, components, or combinations thereof, and are intended to cover non-exclusive inclusion.

It should be explained in advance that in an embodiment, the suspension system provided by the present disclosure can be applied to a vehicle. The suspension system is connected between the body and the wheel and is configured to transmit force and torque. Meanwhile, the suspension system can adjust a relative distance between the frame and the wheel to change a ground clearance of the frame, i.e., the suspension system can adjust a height of the vehicle, to ensure the vehicle can be adapted to different working conditions, buffer impact force of a road surface on the frame, and improve driving stability and comfort of the vehicle.

For example, when the vehicle is in a high-speed driving state, the suspension system can reduce the relative distance between the frame and the wheel to reduce wind resistance and improve driving stability of the vehicle. When the vehicle is driven on a low-lying road surface, the suspension system can increase the relative distance between the frame and the wheel to improve passability of the vehicle.

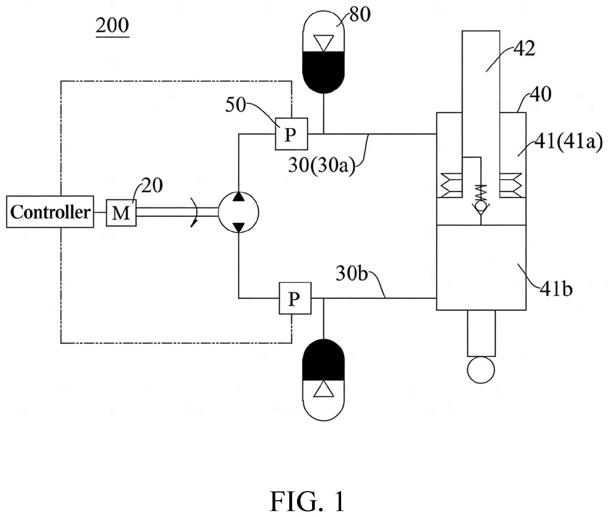

Please refer to FIG. 1, FIG. 1 is a schematic structural diagram of a suspension system 200 provided in an embodiment of the present disclosure.

As shown in FIG. 1, in an embodiment, the suspension system 200 of the present disclosure includes a controller 10, an oil pump 20, an oil pipe 30, and a shock absorber 40. The oil pump 20 is electrically connected to the controller 10, and the oil pump 20 and the shock absorber 40 are in communication via the oil pipe 30. The controller 10 controls a state of the oil pump 20 to adjust magnitude of oil pressure provided to the shock absorber 40, thereby controlling the shock absorber 40 to retract to adjust the relative position between the frame and the wheel.

Specifically, the shock absorber 40 includes a hydraulic cylinder 41 and a piston rod 42. One end of the piston rod 42 extends into the hydraulic cylinder 41, and the other end is fixedly connected to the frame. The hydraulic cylinder 41 is relatively fixedly connected to the wheel (not shown in the figure). The controller 10 controls a rotation speed of the oil pump 20 to pressurize hydraulic oil. The oil pump 20 delivers the pressurized hydraulic oil into the hydraulic cylinder 41 via the oil pipe 30. The hydraulic oil pushes the piston rod 42 to slide relative to the hydraulic cylinder 41. By adjusting the position of the piston rod 42 in the hydraulic cylinder 41, the relative position between the frame and the wheel is adjusted, thereby adjusting the height of the vehicle.

It should be noted that the connection relationship between the hydraulic cylinder 41 and the piston rod 42 and the frame and the wheel in the foregoing embodiment is only an exemplary introduction. That is, in other embodiments of the present disclosure, the hydraulic cylinder 41 can be fixedly connected to the frame, and the piston rod 42 can be fixedly connected to the wheel. By adjusting the relative position of the piston rod 42 in the hydraulic cylinder 41, adjustment of the vehicle height can also be achieved, which is not particularly limited in the present disclosure.

Further, the suspension system 200 of the present disclosure further includes a pressure sensor 50. The pressure sensor 50 is arranged on the oil pipe 30 and is in communication connection with the controller 10. The pressure sensor 50 can detect the oil pressure in the oil pipe 30 in real time and feed back a detection signal to the controller 10. The controller 10 adjusts the rotation speed and/or rotation direction of the oil pump 20 based on the detection signal and the driving condition of the vehicle (the operating state of the vehicle, the road condition, etc.) to correct the oil pressure in the oil pipe 30, thereby accurately controlling the position of the piston rod 42 in the hydraulic cylinder 41, i.e., accurately controlling the retraction stroke of the shock absorber 40.

It is understandable that by arranging the pressure sensor 50 on the oil pipe 30 to detect pressure in the oil pipe 30 in real time, the suspension system 200 of the present disclosure enables the controller 10 to perform dynamic adaptive adjustment on the shock absorber 40 according to the driving condition of the vehicle, to ensure the shock absorber 40 always remains in an optimal retraction position. Meanwhile, by integrating the pressure sensor 50 on the oil pipe 30, a spatial layout is optimized, and space utilization is improved.

In the embodiment shown in FIG. 1, the hydraulic cylinder 41 includes a first inner cavity 41a and a second inner cavity 41b, i.e., the piston rod 42 extends into the hydraulic cylinder 41 and is sealingly connected to the hydraulic cylinder 41 to divide the hydraulic cylinder 41 into the first inner cavity 41a and the second inner cavity 41b. For ease of description, the first inner cavity 41a can be defined to be closer to the frame relative to the second inner cavity 41b. The oil pipe 30 includes a first oil pipe 30a and a second oil pipe 30b. The first oil pipe 30a provides communication between the oil pump 20 and the first inner cavity 41a. The second oil pipe 30b provides communication between the oil pump 20 and the second inner cavity 41b. By controlling an oil quantity difference between the first inner cavity 41a and the second inner cavity 41b via the oil pump 20, the piston rod 42 is caused to reciprocate in retraction, thereby adjusting the relative position between the frame and the wheel.

It is understandable that during driving of the vehicle, the relative position between the frame and the wheel, i.e., the height of the vehicle, is adjusted according to actual situations, which can improve stability and comfort of the vehicle. For example, when the vehicle is in a high-speed driving state, the oil pump 20 draws hydraulic oil in the second inner cavity 41b back to the oil pump 20 via the second oil pipe 30b and delivers it to the first inner cavity 41a via the first oil pipe 30a, to ensure the hydraulic oil in the first inner cavity 41a is more than that in the second inner cavity 41b, thereby causing the piston rod 42 to slide toward a side of the wheel to lower the height of the vehicle, thereby improving stability of the vehicle. When the vehicle is driven on a low-lying road surface, the oil pump 20 draws hydraulic oil in the first inner cavity 41a back to the oil pump 20 via the first oil pipe 30a and delivers it to the second inner cavity 41b via the second oil pipe 30b, to ensure the hydraulic oil in the second inner cavity 41b is more than that in the first inner cavity 41a, thereby causing the piston rod 42 to slide toward a side of the frame to raise the height of the vehicle, thereby improving passability of the vehicle.

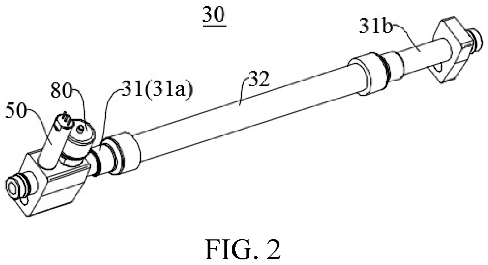

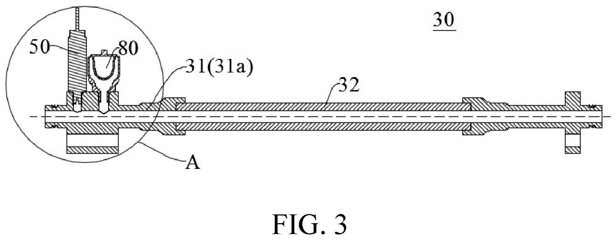

Please refer to FIG. 2 and FIG. 3 together, where FIG. 2 is a schematic structural diagram of the oil pipe 30 provided in an embodiment of the present disclosure, and FIG. 3 is a cross-sectional schematic structural diagram of the oil pipe 30 provided in an embodiment of the present disclosure.

As shown in FIG. 1 to FIG. 3, in an embodiment, the oil pipe 30 includes a fitting 31 and a flexible section 32. Specifically, the flexible section 32 can be a rubber hose. A number of the fitting 31 is two. The two fittings 31 are arranged at opposite ends of the flexible section 32 along its own length and are connected to the flexible section 32. For ease of description, the two fittings 31 are defined as a first fitting 31a and a second fitting 31b. The first fitting 31a is configured for connection to the oil pump 20. The second fitting 31b is configured for connection to the hydraulic cylinder 41 in the shock absorber 40. A through hole 33 extending through a side in a radial direction of the first fitting 31a itself is arranged on the first fitting 31a. The pressure sensor 50 is embedded in the through hole 33.

It is understandable that in this embodiment, the first fitting 31a and the second fitting 31b are arranged to ensure connection reliability between the oil pipe 30 and the oil pump 20 and the shock absorber 40. Meanwhile, the through hole 33 is arranged on the first fitting 31a to facilitate fixing of the pressure sensor 50 and ensure that the pressure sensor 50 can accurately detect pressure in the oil pipe 30. In addition, the flexible section 32 is arranged on the oil pipe 30. The flexible section 32 can allow the oil pipe 30 to be displaced relative to the oil pump 20 or the shock absorber 40, which is beneficial to layout of the suspension system 200. Meanwhile, the flexible section 32 also has a function of absorbing pressure fluctuation in the oil pipe 30, which can reduce noise to a certain extent.

It should be noted that the number and position of the through hole 33 and the pressure sensor 50 in the foregoing embodiment are only exemplary introductions and do not represent actual numbers and actual positions of the through hole 33 and the pressure sensor 50 in other embodiments. That is, the number and position of the through hole 33 and the pressure sensor 50 of the present disclosure can be adaptively adjusted according to actual application scenarios, which is not particularly limited in the present disclosure.

In an embodiment, the fitting 31 is made of a metal material. It is understandable that making the fitting 31 with a metal material can ensure strength of connection between the fitting 31 and the oil pump 20 or the shock absorber 40, and is beneficial to fixed installation of the pressure sensor 50. It should be noted that the material of the fitting 31 in the foregoing embodiment is only an exemplary introduction and does not represent materials of a fitting in other embodiments of the present disclosure. For example, in another embodiment, the fitting 31 can be made of hard plastic, which can also ensure strength of connection between the fitting 31 and the oil pump 20 or the shock absorber 40, which is not limited in the present disclosure.

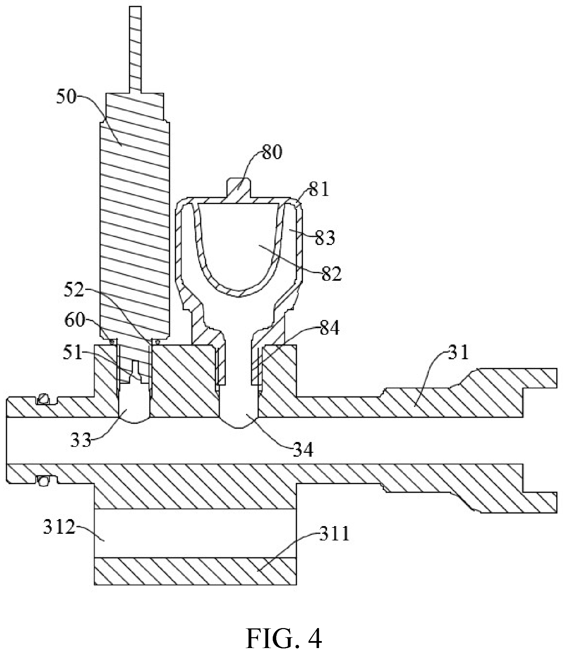

Please refer to FIG. 4 together, FIG. 4 is a partial enlarged view at portion A in FIG. 3.

As shown in FIG. 1 to FIG. 4, in an embodiment, the pressure sensor 50 includes a sensing section 51 and a fixing section 52. The sensing section 51 is closer to an interior of the fitting 31 relative to the fixing section 52 and is configured to detect oil pressure in the oil pipe 30. A periphery of the fixing section 52 is arranged with a thread. The fixing section 52 extends into the through hole 33 and abuts against an inner wall of the through hole 33 to fixedly arrange the pressure sensor 50 in the through hole 33. Or it can be understood that the pressure sensor 50 and the fitting 31 are connected by a threaded connection. It is understandable that in this embodiment, by connecting the pressure sensor 50 and the fitting 31 in the form of a threaded connection, connection reliability between the pressure sensor 50 and the fitting 31 is ensured.

In an embodiment, the flexible section 32 and the fitting 31 are connected by a press-fitting process. It is understandable that based on the press-fitting process being relatively simple, by connecting the fitting 31 and the flexible section 32 using the press-fitting process, both connection reliability and sealing performance between the fitting 31 and the flexible section 32 are ensured, and a structure of the oil pipe 30 is simplified, thereby reducing production costs.

In the embodiment shown in FIG. 4, a sealing element 60 is further arranged between the pressure sensor 50 and the through hole 33. The sealing element 60 is configured to prevent hydraulic oil in the oil pipe 30 from leaking from the through hole 33. Specifically, the sealing element 60 can be arranged as a sealing gasket or a sealing ring. The sealing element 60 is sleeved on a periphery of the fixing section 52 to seal and fill a gap between the pressure sensor 50 and the through hole 33.

It is understandable that in this embodiment, by arranging the sealing element 60 between the pressure sensor 50 and the through hole 33 to seal the through hole 33, the hydraulic oil in the oil pipe 30 is prevented from leaking from the through hole 33, thereby improving safety performance of the suspension system 200 of the present disclosure.

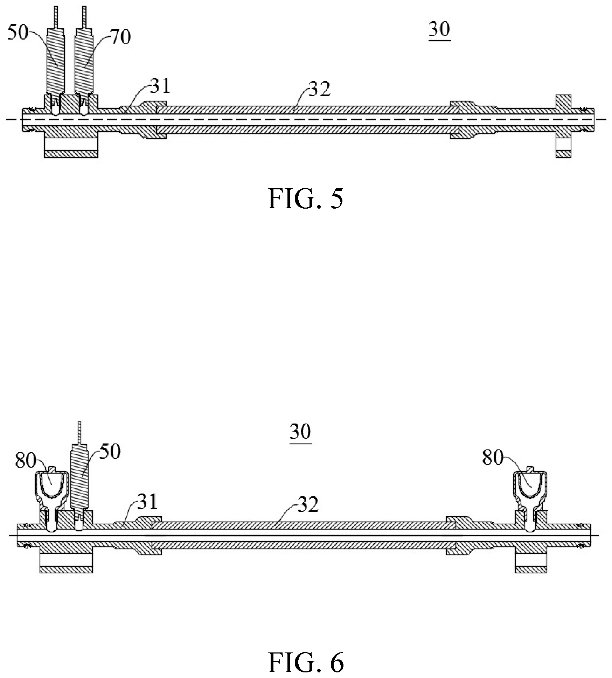

Please refer to FIG. 5 together, FIG. 5 is a cross-sectional schematic structural diagram of the oil pipe 30 provided in another embodiment of the present disclosure.

As shown in FIG. 5, in an embodiment, a temperature sensor 70 is arranged on the oil pipe 30. Specifically, the temperature sensor 70 can also be arranged on the fitting 31. The temperature sensor 70 is configured to detect oil temperature in the oil pipe 30 in real time. Meanwhile, the temperature sensor 70 can be in communication connection with the controller 10 to transmit a detection signal to the controller 10. It is understandable that in this embodiment, by arranging the temperature sensor 70 on the oil pipe 30 to detect the oil temperature in the oil pipe 30 in real time, the controller 10 is facilitated to intelligently adjust working states of other functional components in the suspension system 200 according to the detection signal, ensuring that the oil temperature is maintained within a normal range and ensuring normal operation of the suspension system 200.

It should be noted that the connection manner between the temperature sensor 70 and the controller 10 in the foregoing embodiment is only an exemplary introduction. For example, in another embodiment, the temperature sensor 70 can be electrically connected to the controller 10, which can also transmit the detection signal to the controller 10.

In an embodiment, the pressure sensor 50 and the temperature sensor 70 are of an integrated structure. That is, a pressure-temperature integrated sensor can be configured to detect pressure and temperature in the oil pipe 30. It is understandable that arranging the pressure sensor 50 and the temperature sensor 70 to be of the integrated structure ensures that the suspension system 200 can collect both oil pressure and oil temperature in the oil pipe 30, facilitates intelligent adjustment by the controller 10, and can also reduce costs and improve space utilization.

Please refer back to FIG. 4, In an embodiment, the suspension system 200 of the present disclosure further includes an accumulator 80. The accumulator 80 includes a housing 81 forming an accommodation cavity 83, a bladder 82, and a port 84 in communication with an exterior and the accommodation cavity 83. The bladder 82 is accommodated in the accommodation cavity 83, and the bladder 82 is pre-charged with gas. The fitting 31 includes a mounting hole 34 extending through a side in its own radial direction. The port 84 is fixed to the oil pipe 30 through the mounting hole 34 and enables the accommodation cavity 83 of the accumulator 80 to be in communication with the oil pipe 30. A small amount of hydraulic oil is also filled in the accommodation cavity 83. The accumulator 80 is configured to absorb hydraulic oil in the oil pipe 30 or to release hydraulic oil into the oil pipe 30 to adjust pressure fluctuation in the oil pipe 30.

Specifically, when oil pressure in the oil pipe 30 suddenly increases, hydraulic oil in the oil pipe 30 can enter the accommodation cavity 83. A volume of gas in the bladder 82 decreases as the oil pressure increases, thereby storing the hydraulic oil in the accommodation cavity 83 to counteract pressure fluctuation in the oil pipe 30, avoid hydraulic shock, thereby reducing noise, protecting components in the suspension system 200, and improving operating stability of the suspension system 200. When pressure in the oil pipe 30 suddenly decreases, the gas in the bladder 82 expands to release the hydraulic oil in the accommodation cavity 83 into the oil pipe 30, ensuring that the oil pipe 30 has sufficient oil pressure to improve a response speed of the suspension system 200 of the present disclosure.

In an embodiment, the accumulator 80 and the fitting 31 can be connected by a threaded connection to ensure connection reliability between the accumulator 80 and the oil pipe 30.

In an embodiment, a sealing gasket or sealing ring is arranged between the port 84 of the accumulator 80 and the mounting hole 34 to seal the mounting hole 34 and prevent hydraulic oil in the oil pipe 30 from leaking from the mounting hole 34.

Please refer to FIG. 6 together, FIG. 6 is a cross-sectional schematic structural diagram of the oil pipe 30 provided in yet another embodiment of the present disclosure.

As shown in FIG. 6, in an embodiment, a number of the accumulator 80 is two. Along a length direction of the oil pipe 30, the two accumulators 80 are arranged on two sides of the pressure sensor 50, respectively. It is understandable that by arranging the accumulators 80 on the two sides of the pressure sensor 50 along the length direction of the oil pipe 30, the pressure sensor 50 is protected, and damage to the pressure sensor 50 caused by hydraulic shock in the oil pipe 30 can be effectively avoided.

Please refer back to FIG. 4. In an embodiment, the suspension system 200 of the present disclosure includes two fixing members (not shown in the figure). Each fitting 31 includes a fixing block 311, i.e., a number of the fixing block 311 corresponds to two. A through hole 312 is arranged on each fixing block 311. The through hole 312 extends along an axial direction of the fitting 31. One end of one of the fixing members is fixedly connected to the oil pump 20, and the other end passes through the through hole 312 and connects the fitting 31 to the oil pump 20. One end of the other fixing member is fixedly connected to the shock absorber 40, and the other end passes through the through hole 312 and connects the fitting 31 to the shock absorber 40. In a specific embodiment, the fixing member can be arranged as a screw. It is understandable that in this embodiment, through cooperation of the fixing member and the fixing block 311, the fitting 31 and the oil pump 20 or the shock absorber 40 are reliably fixed, preventing the oil pipe 30 from falling off the oil pump 20 or the shock absorber 40 due to pressure fluctuation in the oil pipe 30.

It should be understood that terms "first", "second", etc. are configured for descriptive purposes only and cannot be understood as indicating or implying relative importance or quantity. Thus, features defined with "first", "second", etc. may explicitly or implicitly include one or more of the features. In the description of the embodiments of the present disclosure, "a plurality of" means two or more, unless otherwise specifically defined.

In the description of this specification, reference to terms such as "some embodiments", "illustrative embodiments", "example", etc. means that a specific feature, structure, material, or characteristic described in connection with the embodiment or example is included in at least one embodiment or example of the present disclosure. In this specification, schematic expressions of the above terms do not necessarily refer to the same embodiment. Moreover, the described specific features, structures, materials, or characteristics can be combined in a suitable manner in any one or more embodiments.

It should be understood that application of the present disclosure is not limited to the above examples. For a person of ordinary skill in the art, improvements or modifications can be made based on the above description. All these improvements and modifications shall fall within the protection scope of the appended claims of the present disclosure. A person of ordinary skill in the art can understand all or part of processes for implementing the above embodiments and make equivalent changes according to the claims of the present disclosure, which still fall within the scope covered by the present disclosure.

## Claims

1. A suspension system (200), comprising a controller (10), an oil pump (20), and a shock absorber (40); the controller (10) being electrically connected to the oil pump (20), the oil pump (20) and the shock absorber (40) are in communication via an oil pipe (30), and the controller (10) adjusts oil pressure in the shock absorber (40) via the oil pump (20) to drive the shock absorber (40) to retract; a pressure sensor (50) being arranged on the oil pipe (30), the pressure sensor (50) is in communication connection with the controller (10), and the pressure sensor (50) being configured to detect oil pressure in the oil pipe (30).

2. The suspension system (200) according to claim 1, wherein the shock absorber (40) comprises a hydraulic cylinder (41) and a piston rod (42), one end of the piston rod (42) extends into the hydraulic cylinder (41) to divide the hydraulic cylinder (41) into a first inner cavity (41a) and a second inner cavity (41b).

3. The suspension system (200) according to claim 1 or 2, wherein the oil pipe (30) comprises a fitting (31) connected to the oil pump (20) or the shock absorber (40), a through hole (33) extending through a side in a radial direction of the fitting (31) itself is arranged on the fitting (31), and the pressure sensor (50) is embedded in the through hole (33).

4. The suspension system (200) according to claim 3, wherein the pressure sensor (50) comprises a sensing section (51) and a fixing section (52), the sensing section (51) is closer to an interior of the fitting (31) relative to the fixing section (52), and the fixing section (52) is arranged with a thread.

5. The suspension system (200) according to claim 3, wherein a sealing element (60) is further arranged between the pressure sensor (50) and the through hole (33), and the sealing element (60) is configured to prevent hydraulic oil in the oil pipe (30) from leaking from the through hole (33).

6. The suspension system (200) according to any one of claims 1 to 5, wherein a temperature sensor (70) is arranged on the oil pipe (30), the temperature sensor (70) is in communication connection with the controller (10), and the temperature sensor (70) is configured to detect oil temperature in the oil pipe (30).

7. The suspension system (200) according to claim 6, wherein the pressure sensor (50) and the temperature sensor (70) are of an integrated structure.

8. The suspension system (200) according to any one of claims 1 to 5, wherein the suspension system (200) comprises an accumulator (80), the accumulator (80) is in communication with the oil pipe (30), and the accumulator (80) is configured to absorb hydraulic oil in the oil pipe (30) or to release hydraulic oil into the oil pipe (30) to adjust pressure fluctuation in the oil pipe (30).

9. The suspension system (200) according to claim 8, wherein the accumulator (80) comprises a housing (81) forming an accommodation cavity (83), a bladder (82) accommodated in the accommodation cavity (83), and a port (84) in communication with an exterior and the accommodation cavity (83).

10. The suspension system (200) according to claim 8, wherein a number of the accumulator (80) is two, and along a length direction of the oil pipe (30), the two accumulators (80) are arranged on two sides of the pressure sensor (50), respectively.

11. The suspension system (200) according to any one of claims 1 to 5, wherein the oil pipe (30) comprises a flexible section (32), and the flexible section (32) is configured to allow the oil pipe (30) to be displaced relative to the oil pump (20) or the shock absorber (40).

12. The suspension system (200) according to claim 11, wherein the flexible section (32) and the fitting (31) are connected by a press-fitting process.

13. A vehicle, comprising a frame, a wheel, and the suspension system (200) according to any one of claims 1 to 12, the suspension system (200) is connected between the frame and the wheel and is configured to adjust a height of the frame.
